# EUROPEAN PATENT APPLICATION

(11) **EP 4 664 180 A1**
(43) Date of publication of application: **17.12.2025**
(21) Application number: 24181713.9
(22) Date of filing: 12.06.2024
(51) Int. Cl.: G02B 21/00, G02B 21/36

(54) **METHOD FOR ACQUIRING IMAGES AND RELATED MICROSCOPE**

(71) Applicant: Viventis Microscopy Sàrl, 1015 Lausanne (CH)
(72) Inventor: MIGLIOZZI, Daniel, 1015 Lausanne (CH); STRNAD, Petr, 1015 Lausanne (CH); BONI, Andrea, 1015 Lausanne (CH)
(74) Representative: Maiwald GmbH

(57) **Abstract**

The present disclosure concerns a method for acquiring images of a sample, comprising the steps of illuminating the sample with an illumination beam forming at least one light sheet intersecting the sample; at multiple positions of the sample in a z-direction, detecting light emitted from the sample along two different imaging paths by means of first and second imaging objectives having respective first and second imaging focal planes shifted relative to each other in the z-direction and intersecting the sample, and obtaining corresponding first and second stacks of images, each stack representing multiple planes of the sample in the z-direction, and each image representing a plane of the sample in the z-direction.

## Description

### TECHNICAL FIELD

The present disclosure concerns a method for acquiring 2D images of a sample, a method for obtaining a 3D image of a sample, a control unit configured to control a microscope system accordingly, and a microscope system comprising said control unit. The present disclosure also concerns a method for generating a 3D image of a sample.

### BACKGROUND

In a microscope having two imaging objectives and two corresponding imaging paths, the imaging objectives may be arranged such that the imaging focal planes of the two (e.g. opposing) imaging objectives overlap, i.e. are identical. Illumination (e.g. a sheet of light) may be set to illuminate such a plane such that the image of this same plane may be recorded simultaneously through the two imaging objectives, thus generating two simultaneous (opposite) views of the same plane.

However, when an object/sample (e.g., a cell, a hydrogel) is placed between an imaging objective and its focal plane, such focal plane may translate/shift depending on the refractive index of the sample (more specifically, on the difference between the refractive index of the sample and the one of the medium that was there in the absence of the sample). Therefore, when a sample to be imaged is put in place, the two focal planes (i.e. the focal plane per imaging objective) may not overlap any longer because of the shift/offset of the focal planes caused by the presence of the sample. The focal plane shift might depend on the specific sample being placed between the two objectives, in particular in case different samples with different refractive index characteristics are imaged after each other with the microscope.

Due to the offset between the focal planes, the illumination may not illuminate the two imaging focal planes simultaneously if the shift of the imaging focal planes is not compensated for in the imaging path, e.g. by means of movement of objectives, tube lenses, cameras. Without correction of the shift of the imaging focal planes, the quality of the recorded views and/or of a 3D image reconstructed on this basis may be decreased.

It is desired to improve the image quality in images obtainable by means of a light sheet microscope.

### SUMMARY

The present invention solves this problem and provides a method for acquiring 2D images of a sample, the method comprising the steps of illuminating the sample with an illumination beam (running along the illumination path(s)) forming at least one light sheet intersecting the sample; at multiple positions of the sample in a z-direction, detecting light emitted from the sample along two different imaging/detection paths (i.e. first and second detection paths) by means of first and second imaging objectives having respective first and second imaging focal planes shifted relative to each other in the z-direction and intersecting the sample (in order to image the sample from different perspectives/directions), and obtaining corresponding first and second stacks of images, each stack representing multiple planes of the sample in the z-direction (corresponding to the multiple positions of the sample), and each image representing a plane of the sample in the z-direction; including a preceding adjustment step of, for multiple (different; optionally each) positions of the sample in the z-direction, adjusting the light sheet relative to the first imaging focal plane of the first imaging objective (preferably such that the light sheet overlaps with the first imaging focal plane of the first imaging objective or such that the light sheet illuminates at least a part of the depth of field of the first imaging objective or such that the light sheet is (essentially) co-planar with the first imaging focal plane of the first imaging objective) according to a first adjustment setting, and adjusting the light sheet relative to the second imaging focal plane of the second imaging objective (preferably such that the light sheet overlaps with the second imaging focal plane of the second imaging objective or such that the light sheet illuminates at least a part of the depth of field of the second imaging objective or such that the light sheet is (essentially) co-planar with the second imaging focal plane of the second imaging objective) according to a second adjustment setting; and wherein, for image acquisition, the sample is sequentially illuminated according to the first and second adjustment settings and emitted light is detected via the first and second imaging objectives, respectively, such that the first and second stacks of images are acquired, wherein the first and second stacks are characterized by a shift of the planes in the z-direction relative to each other.

In embodiments of the disclosure, first and second imaging objectives having respective first and second imaging focal planes may be regarded as shifted relative to each other in the z-direction and intersecting the sample to image the sample from different perspectives/directions. The amount of the shift might depend on the refractive index mismatch between the sample and the surrounding medium.

The second adjustment setting may differ from the first adjustment setting, although the first and second adjustment settings may possibly be identical, in particular if focal plane shifts according to refractive index mismatch between the sample and the surrounding medium is small or neglectable. The adjustment settings may be regarded as illumination adjustment settings as they concern adjustment of illumination-related parameters (optionally only illumination-related parameters i.e. excluding adjustment of imaging/detection-related parameters).

In some embodiments, detection/imaging may be sequential via the first and second imaging objectives according to sequential light sheet generation. Such a sequential detection/imaging (of 2D images) may be carried out while the sample is in one particular position between the two imaging objectives, e.g. there is no 3D image acquisition done by sample movement along a direction of an optical axis of the first and/or the second imaging objective.

In some embodiments, more than two detection/imaging paths and corresponding imaging objectives and/or preferably more than one illumination path and a corresponding illumination objective is/are possible.

The adjustment may be regarded as an alignment. It allows for subsequent calibration. An adjustment setting may be derived/determined and subsequently applied per z-position of the sample, per imaging objective and per illumination objective, especially depending on a particular sample being located between the two opposing imaging objectives, in particular if a plurality of different samples (with respective different refractive index characteristics and/or surrounding medium characteristic) are to be imaged subsequentially.

The shift may be regarded as an offset or displacement (misalignment) - in particular of the illumination light sheet - in the z-direction.

In embodiments of the disclosure, the adjustment may represent an individual adjustment of first and second imaging focal planes with the light sheet via individual first and second adjustment settings. The adjustment may provide for an overlap/identity between the first imaging focal plane and the light sheet according to a first adjustment setting; and for an overlap/identity between the second imaging focal plane and the (optionally same) light sheet according to a second adjustment setting. The adjustment settings may be determined/defined per position of the sample in z-direction. For example, the light sheet may be re-positioned to achieve the various adjustment settings, optionally while the imaging paths remain the same. Adjustment does, in some embodiments of the disclosure, not include of the shift of the imaging focal planes e.g. by a shift or adjusted movement of an imaging objective relative to the microscope or the camera relative to the imaging objective, i.e. consideration of the shift during image acquisition. This allows for efficient and yet precise image acquisition. Accordingly, the image quality, e.g. in a 3D image on the basis of the views taken with shifted imaging focal planes, may be improved.

Embodiments of the present disclosure may allow to at least partially compensate for a shift of images which have been acquired by the two imaging objectives relative to each other. A shift may be present during image acquisition and, hence, in the 2D images (stack of images) as acquired, and the shift may (only) be dealt with for and/or during reconstruction of a 3D image on the basis of the 2D images. Specifically, e.g. when recording several planes of the sample for three-dimensional imaging and the views taken via the two imaging objectives are shifted along the optical axis, the present disclosure may help to at least partially correct for the shift. Accordingly, embodiments of the present disclosure may improve image quality.

Specifically, the (ideally optimal) alignment of the illumination may be found independently for each view by adjusting the illumination. Subsequently, the two views being imaged by the respective first and second imaging objective may be recorded sequentially by illuminating one focal plane at a time. The image quality of the two individual views is thus considered as optimal. Subsequently, e.g. the series of planes recorded from the two views may be cross-correlated, so as to quantify the shift between the two views. The shift may then be corrected in subsequent processing, e.g. to reconstruct a 3D image of the sample using the two views.

Put differently, when (optimal) alignment of a light-sheet may be different for two imaging objectives, to obtain the best of the two views may require taking this difference in the alignment into account, in some embodiments of the disclosure.

The light sheet may illuminate the first and second imaging focal planes sequentially during acquisition, as such providing for sequential illumination. Hence, no simultaneous illumination of the first and second imaging focal planes may be carried out, i.e. no simultaneous detection via the first and second detection paths may be carried out.

The first and second imaging objectives may be arranged to have focal planes substantially parallel or co-planar to each other, while being spaced apart, i.e. shifted or offset along the optical axis of the respective imaging objective, e.g. in z-direction.

Although embodiments of the present disclosure may specifically be helpful in case of changes in the refractive index due to the sample or a plurality of different samples, which may lead to the imaging focal planes of two imaging objectives falling apart (i.e. no longer being essentially coincident), embodiments of the present disclosure are not limited in this regard. Specifically, also if, for other reasons, the imaging focal planes of the two imaging objectives are not coincident, embodiments of the present disclosure may be helpful.

Some embodiments of the disclosure may be helpful in case of large samples or for a sample in media with high-refractive index (e.g., matrigel).

The planes of the stacks of 2D images may be shifted relative to each other, which means that a physical plane A of the sample which is shown in a n-th 2D image of a stack corresponds (i.e. is substantially identical) to a m-th 2D image of the other stack. Hence, the physical plane A is shown in the image n in the first stack, while it is shown in the image m in the second stack. Since the n-th and m-th images correspond to physical positions of the sample, the physical distance between positions m and n is referred to as the shift/offset in z-direction.

From another perspective, the n-th image of the first stack may show a physical plane A of the sample, while the n-th image of the second stack may show a physical plane B of the sample. The shift between the stacks may indicate, for the same image number, the physical distance between the planes A and B of the sample.

Both ways of viewing the shift may be regarded as a shift between the first and second stacks of images in z-direction. The shift may be regarded as an offset between the imaging focal plane and the stacks of images.

The z-direction may be defined by a line connecting the first and second imaging objectives. For example, the optical axis of the imaging objectives may run in the z-direction.

The present disclosure also relates to a method for obtaining a 3D image of a sample, comprising the method for acquiring images of the sample according to the disclosure, i.e. as described herein, wherein (for reconstruction of the 3D image) the 3D image of the sample is obtained based on at least parts of the first and second stacks of images, wherein the shift of the planes of the first and second stacks relative to each other is at least partially corrected for (prior and/or during) reconstruction of the 3D image of the sample. In embodiments of the disclosure, efficient and reliable reconstruction may be realized by means of compensation/correction of the shift before or during reconstruction.

Optionally, the illumination beam is switched between the first and second adjustment settings during image acquisition. This may allow for switching between image acquisition by the first and the second imaging objectives, in particular at the same sample position. Accordingly, an efficient image acquisition may be possible.

Optionally, the sample is sequentially illuminated according to the first and second adjustment settings at a same position of the sample in the z-direction. This may be regarded as alternating acquisition by means of switching illumination beam for the same sample position. This may support efficient image acquisition.

Optionally, the sample is illuminated according to the first adjustment setting at the multiple (different; optionally each) positions of the sample in the z-direction and thereby images are acquired via the first imaging objective, and is subsequently illuminated according to the second adjustment setting at the multiple positions of the sample in the z-direction and thereby images are acquired via the second imaging objective. This may be regarded as an alternative to the image acquisition disclosed in the preceding paragraph. However, the two acquisition procedures may not be mutually exclusive. Subsequent, complete z-movements of sample for subsequent first and second acquisition turns via, firstly, the first imaging objective and, secondly, the second imaging objective, respectively, may also provide for an efficient image acquisition.

Optionally, the shift between the first and second stacks is identified by means of image analysis, such as correlation of images relative to each other. This may allow for a software-based quantification of the shift and in particular in a reliable manner.

More optionally, the image analysis includes cross-correlating the images of the stacks with each other and/or a pixel-by-pixel correlation of at least a part of the images of each of the first and second stacks. This represents an efficient realization.

Optionally, an adjustment/alignment procedure comprises: (optionally simultaneously) acquiring a plurality of images of the sample via both (the two different) detection paths while adjusting (and/or positioning) the light sheet (optionally continuously) along the z-direction resulting in a first stack of alignment images and a second stack of alignment images, respectively, and determining in each of the acquired first stack of alignment images and second stack of alignment images an image having at least one of the highest image sharpness and the highest image contrast. For example, based on the actual position of the light sheet of the sharpest image of the first and the second stack of alignment images, the first and second adjustment settings are determined. This may be regarded as a hardware-based quantification of the shift and may be alternative or additional to image analysis-based determination of the shift. Thus, the adjustment/alignment procedure is in particular carried out in order to identify the shift between the first and second stacks.

Optionally, during reconstruction, an image of the first stack and an image of the second stack, which images correspond to the same plane of the sample, are combined. This may lead to improved image quality in the 3D image.

Optionally, the first and second imaging paths substantially run opposite to each other and/or the first and second imaging objectives are distanced from each other in the z-direction. The first and second imaging objectives may be arranged opposite to each other, e.g. having identical or at least parallel optical axes. This allows for improved imaging, also in terms of spatial arrangement of the entities.

Optionally, the illumination beam selectively defines first and second illumination paths passing through first and second illumination objectives, respectively, and forming first and second light sheets, respectively, wherein, for each illumination path, corresponding first and second adjustment settings are provided, and the sample is sequentially illuminated along the first illumination path according to the first and second adjustment settings for the first illumination path for detection via the first and second imaging objectives, respectively, and along the second illumination path according to the first and second adjustment settings for the second illumination path for detection via the first and second imaging objectives, respectively. Hence, two light sheets may be generated, wherein each light sheet has individual first and second adjustment settings (per imaging objective).

Further optionally, a single light source, such as a laser, may be provided for generation of two illumination paths. For example, the laser beam may be split into first and second illumination paths. This may allow for cost-efficient realization of two light-sheets.

Optionally, an adjustment arrangement which is common to the first and second illumination paths provides the first and second arrangement settings. In particular, common/shared hardware components may realize a respective adjustment setting. This may support cost- and space-saving realizations.

The present disclosure may be seen as directed to light-sheet microscopy and a corresponding light-sheet microscope.

The present disclosure is also directed to a control unit configured to control a microscope system to carry out the method of the present disclosure.

The present disclosure is also directed to a microscope system for imaging at lease one sample, preferably a plurality of samples, the microscope system comprising the control unit of the present disclosure.

The present disclosure is also directed to a method, in particular a computer-implemented method, for generating a 3D image of a sample. The method may be a computer-implemented method, for generating a 3D image of a sample, the method comprising the steps of receiving image data comprising/representing first and second stacks of acquired images, the stacks characterized by a shift of planes of the sample in a z-direction relative to each other, each stack representing multiple planes of the sample (taken from different perspectives/directions) in the z-direction, and each image representing a plane of the sample in the z-direction, and reconstructing the 3D image of the sample based on the image data, wherein the shift of the planes of the first and second stacks relative to each other is at least partially corrected for and/or during reconstruction of the 3D image of the sample. The first and second stacks of images are representing image acquisition by illuminating the sample with an illumination beam forming at least one light sheet intersecting the sample; at multiple positions of the sample in a z-direction, detecting light emitted from the sample along two different imaging paths by means of first and second imaging objectives, respectively, having respective first and second imaging focal planes shifted relative to each other in the z-direction and intersecting the sample, and obtaining corresponding first and second stacks of images, and a preceding adjustment step of, for different (multiple; optionally each) positions of the sample in the z-direction, adjusting the light sheet relative to the first imaging focal plane of the first imaging objective according to a first adjustment setting, and adjusting the light sheet relative to the second imaging focal plane of the second imaging objective according to a second adjustment setting; and image acquisition further including sequential illumination of the sample according to the first and second adjustment settings and detection of the emitted light via the first and second imaging objectives, respectively, such that the first and second stacks of images are acquired.

At least some of the steps may be performed on/by a computer system, such that the method may be regarded as a computer-implemented method.

The disclosure is also directed to a data processing apparatus comprising means for carrying out the method of the present disclosure, a computer program (product) comprising instructions which, when the program is executed by a computer, cause the computer to carry out the method of the present disclosure, and a computer-readable medium having stored thereon the computer program (product) of the present disclosure.

An embodiment of the present invention in particular may be carried out for imaging a plurality of (different) samples simultaneously or subsequentially. More preferred, an embodiment of the present invention in particular may be carried out for imaging a plurality of (different) samples subsequentially a plurality of times / repeatedly. These (different) samples might be located in a sample holder at different spatial positions or XYZ locations. The calibration or adjustment step is performed for each sample and for each (different) sample the respective shift of the focal planes of the two imaging objectives may be different and thus also the respective adjustment settings may be different. Preferably, the calibration or adjustment step is performed for all samples once and when, e.g. in a time lapse experiment, the different samples are visited repeatedly for imaging, the respective (different) adjustment settings are applied accordingly. Therefore, different adjustment settings may be applied for each view and sample.

Detailed embodiments and further advantages and features related to the present disclosure are described in the following, wherein these exemplary embodiments shall not be regarded as limiting the invention.

### SHORT DESCRIPTION OF THE FIGURES

Fig. 1 schematically shows a microscope system according to an embodiment of the disclosure.
Fig. 2(a) and 2(b) schematically show image acquisition steps according to an embodiment of the disclosure.
Fig. 3(a) shows two stacks of 2D images according to an embodiment of the disclosure.
Fig. 3(b) shows a diagram for analysis of a correlation coefficient according to an embodiment of the disclosure.

### DETAILED DESCRIPTION

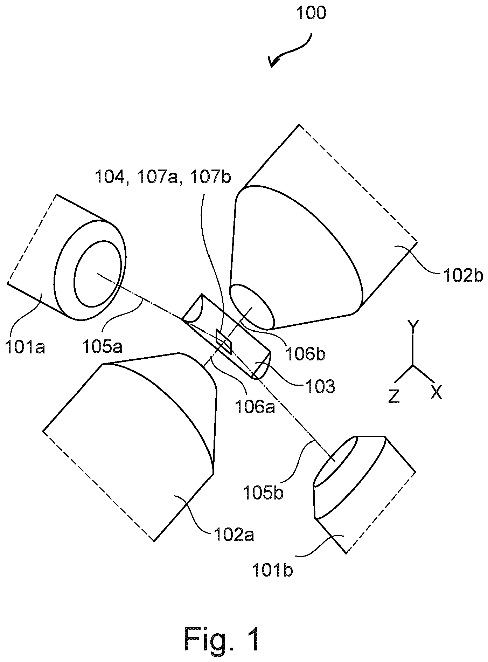

Fig. 1 shows a part of a microscope system 100 having a first illumination objective 101a and a (not mandatory) second illumination objective 101b, as well as a first imaging objective 102a and a second imaging objective 102b. An illumination beam is formed along a first illumination path 105a via the first illumination objective 101a and along a second illumination path 105b via the second illumination objective 101b, each illumination beam forming a light sheet 104. The light sheets formed by the first illumination path 105a and a second illumination path 105b are, in this example, represented by the coinciding light sheet 104. In the following, reference to the light sheet 104 is made, which may be formed by a single illumination objective only (in case of a single illumination path only) or by first and second illumination objectives (in case of two illumination paths, as shown in Fig. 1). Along a first imaging path 106a and along a second imaging path 106b light emitted or originating from the sample 103 is detected by respective cameras (not shown). The first and second imaging paths 106a, 106b substantially run opposite to each other. The optical axis of the first imaging objective 102a is essentially co-axial to the optical axis of the second imaging objective 102b. In Fig. 1, the sample 103 is an "ideal" or hypothetical sample in that no differences in the refractive index (e.g. relative to a medium surrounding the sample) are present. Accordingly, the imaging focal plane 107a of the first imaging objective 102a, and the imaging focal plane 107b of the second imaging objective 102b are identical. Specifically, the light sheet 104 as produced by the first and second illumination objectives 101a, 101b lies in the same plane as the first and second imaging focal planes 107a, 107b. A laser source and further components of the microscope, e.g. a beam splitter, are not shown in Fig. 1.

However, when a "real" sample to be imaged is placed between the two imaging objectives 102a, 102b, the optimal alignment of the light sheet 104 may be found independently for each view by adjusting the illumination accordingly.

When an object to be imaged is placed between the two imaging objectives 102a, 102b, the imaging focal planes 107a, 107b might no longer coincide, but are shifted relative to each other. Hence, the "ideal" or hypothetical constellation of Fig. 1 no longer applies.

For an adjustment procedure, optionally before an image acquisition procedure, the position of the sample 103 may be fixed and images for several adjustments of the light sheet 104 are acquired. The sharpness of these adjustment images is analyzed or computed, and the adjustment is set to be the one corresponding to the sharpest image. This is executed for each view sequentially (per imaging objective 102a, 102b). An example for an adjustment procedure is described in WO 2019/016359 A1. An adjustment arrangement (not shown) common to the first and second illumination paths 105a, 105b provides the first and second arrangement settings.

Accordingly, for different positions of the sample 103 in the z-direction, the light sheet 104 is adjusted relative to the first imaging focal plane 107a of the first imaging objective 102a according to a first adjustment setting, and the light sheet is adjusted relative to the second imaging focal plane 107b of the second imaging objective 102a according to a second adjustment setting, by adjusting illumination parameters by means of the adjustment arrangement accordingly. Preferably, this might be performed for each sample being introduced between the first imaging objective 102a and the second imaging objective 102b. The z-direction might be essentially parallel to the optical axes of the first and second illumination objectives 102a, 102b, or to the first imaging path 106a and the second imaging path 106b.

Instead of the entirety of adjustment steps preceding the entirety of acquisition steps, it is conceivable that some adjustment steps are done immediately before a corresponding acquisition step. It may be sufficient to do the adjustment once for all subsequent imaging steps, but multiple or re-adjustment procedures are not excluded.

Subsequently, during the acquisition procedure, when the sample 104 is imaged, the two views are recorded sequentially via the first imaging objective 102a and the second imaging objective 102b, respectively, for each plane of the sample, with the adjustment setting defined with the preceding adjustment procedure. With continued reference to Fig. 1, the sample 103 is moved in z-direction during image acquisition, while the imaging objectives 102a, 102b remain stationary. At the different/multiple (each) sample positions, the sample 103 is illuminated (according to the corresponding adjustment setting) in a plane, such that different/multiple planes of the sample 103 shifted relative to each other along the z-direction are imaged, i.e. recorded as 2D images.

Image acquisition includes illuminating the sample 103 with an illumination beam 105a forming at least one light sheet 104 intersecting the sample. At multiple positions of the sample 103 in the z-direction, light emitted from the sample 103 along two different imaging paths 106a, 106b is detected by means of first and second imaging objectives 102a, 102b, respectively, having respective first and second imaging focal planes 107a, 107b shifted relative to each other in the z-direction and intersecting the sample 103.

More specifically, the illumination beam selectively defines first and second illumination paths 105a, 105b passing through first and second illumination objectives 101a, 101b, respectively, and forming a respective light sheet 104, wherein, for each illumination path 105a, 105b, corresponding first and second adjustment settings are provided, and the sample 103 is sequentially illuminated along the first illumination path 105a according to the first and second adjustment settings for the first illumination path for detection via the first and second imaging objectives 102a, 102b, respectively, and along the second illumination path 105b according to the first and second adjustment settings for the second illumination path for detection via the first and second imaging objectives 102a, 102b, respectively.

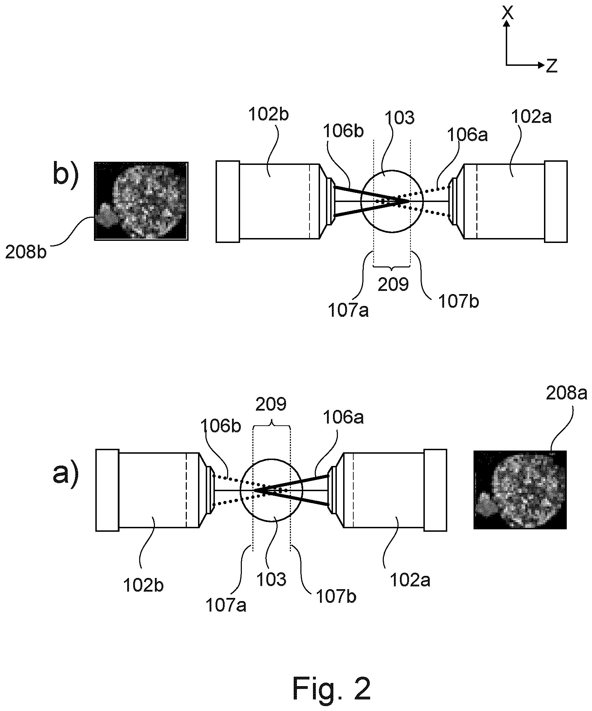

Fig. 2 shows two views, i.e. two 2D images 208a, 208b, recorded sequentially by illuminating one of the first and second focal planes 107a, 107b at a time. The sample 103 is sequentially illuminated according to the first and second adjustment settings and the emitted light is detected via the first and second imaging objectives 102a, 102b.

More specifically, Fig. 2(a) shows image acquisition by means of the first imaging objective 102a, yielding the 2D image 208a of the plane 107a of the sample 103, wherein the plane shown in the image 208a corresponds to the imaging focal plane 107a. This is indicated by means of the "active" imaging path 106a in bold. Fig. 2(b) shows image acquisition by means of the second imaging objective 102b, yielding the 2D image 208b of the plane 107b of the sample 103, wherein the plane shown in the image 208b corresponds to the imaging focal plane 107b. This is indicated by means of the "active" imaging path 106b in bold. Fig. 2(a) as well as Fig. 2(b) show the spatial difference, i.e. the distance in z-direction, between the imaging focal planes 107a and 107b. This difference corresponds to the shift 209. Hence, during acquisition, the shift manifests in the distance of the imaging focal planes 107a and 107b relative to each other in the z-direction.

The illumination beam is switched between the first and second adjustment settings during image acquisition. Accordingly, the sample 103 is sequentially illuminated according to the first and second adjustment settings at a same position of the sample in the z-direction.

The sample 103 is illuminated according to the respective, multiple first adjustment settings at the multiple positions of the sample 103 in the z-direction, and is subsequently illuminated according to the respective multiple second adjustment settings at the multiple positions of the sample 103 in the z-direction. The image quality of the two views 208a and 208b is considered as optimal, as for each image acquisition according to Fig. 2(a) and Fig. 2(b), the respective adjustment setting per view is used. The first illumination objective 101a and the second illumination objective 101b are not shown in Fig. 2.

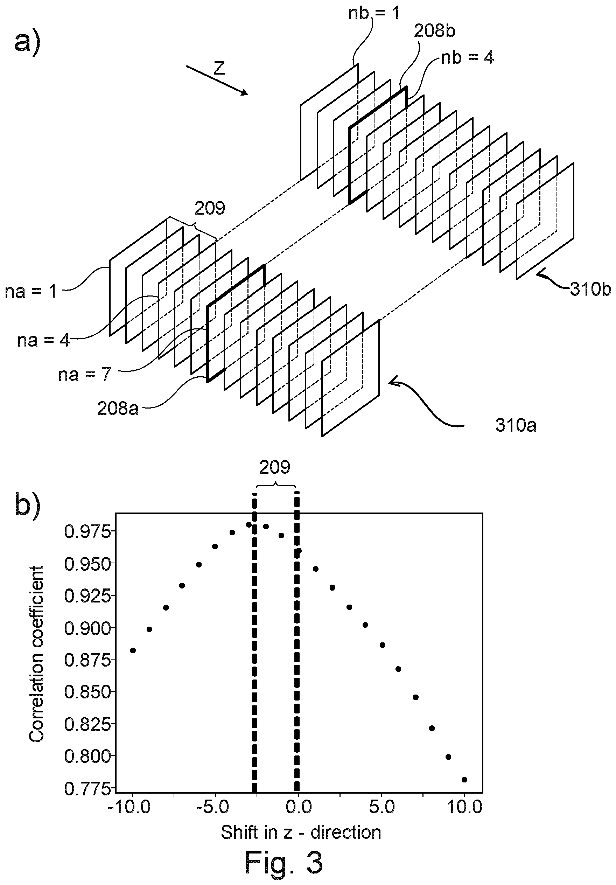

Fig. 3(a) shows two stacks 310a, 310b of 2D images including images 208a, and 208b, respectively. The first and second stacks 310a, 310b of images are obtained, each stack representing multiple planes of the sample in the z-direction, and each image 208a, 208b represents a plane of the sample in the z-direction. The first and second stacks 310a, 310b of images are acquired, wherein the first and second stacks 310a, 310b are characterized by a shift 209 of the planes in the z-direction relative to each other.

The shift 209 in z-direction between the imaging focal planes manifests in the acquired 2D images as a corresponding shift 209 in the correspondence between the 2D images of the two stacks. More specifically, comparing the stacks 310a and 310b, which were acquired according to Fig. 2(a) and 2(b), respectively, with each other by comparing the 2D images of the stacks with each other may mean: The sequence of 2D images na=1, 2, 3, ... of the first image stack 310a is compared to the sequence of 2D images nb=1, 2, 3, ... of the second image stack 310b. Such comparison reveals that image 208a of the first stack 310a and image 208b of the second stack 310b correspond to each other, in that they show the same plane of the sample 103. Optionally, image 208a of the first stack 310a and image 208b of the second stack 310b are different in that they show the same plane of the sample 103 seen from two different perspectives. As the image 208a is the seventh image na=7 of the first stack 310a, and the image 208b is the fourth image nb=4 of the second stack 310b, the shift corresponds to three images, as na-nb=3. Hence, the shift 209 indicates an offset between the stacks 310a, 310b including three images.

Fig. 3(b) shows one way to carry out such comparison for determination of the shift 209, i.e. to quantify the shift 209. Specifically, the sequences of planes recorded from the two views are cross-correlated to quantify the shift 209 between the two views. Specifically, the correlation coefficient between the pixel values of at least a part of the first stack 310a and the pixel values of at least a part of the second stack 310b at which a shift 209 is applied along the z-direction is calculated for multiple values of the shift 209. The maximum of the correlation coefficient as a function of the applied shift 209 in z-direction indicates the shift 209. In the example shown in Fig. 3(a), the shift 209 is 3 planes.

Accordingly, the shift 209 between the first and second stacks 310a, 310b is identified by means of image analysis. For example, the image analysis includes cross-correlating the images 208a, 208b of the stacks 310a, 310b with each other, optionally including a pixel-by-pixel correlation of at least a part of the images of each of the first and second stacks.

For example, to find the shift 209, the similarity between the first stack 310a and shifted versions of the second stack 310b may be determined. The similarity is thus maximal when the shift applied to the second stack 310b corresponds to the physical misalignment, i.e. shift or offset, between the first and second imaging focal planes 107a, 107b. Exemplarily, the similarity may be computed as being the pixel-by-pixel correlation coefficient between the stacks 310a, 310b.

Alternatively, the shift 209 between the first and second stacks 310a, 310b is identified based on an alignment procedure, the alignment procedure comprising: acquiring a plurality of images of the sample via the two different imaging paths 106a, 106b while adjusting the light sheet 104 along the z-direction resulting in a first stack of alignment images and a second stack of alignment images, respectively, and determining in each of the acquired first stack of alignment images and second stack of alignment images an image having at least one of the highest image sharpness and the highest image contrast.

This shift 209 is then corrected in subsequent processing (e.g. fusion of the two sequences/stacks of views) to reconstruct a three-dimensional image of the sample 103, e.g. using both views 208a, 208b. For reconstructing the optimal 3D image of the sample, for each plane of the sample, the sharpest between the two views of such a plane may be selected.

As a comparison, if the imaging focal planes 107a, 107b of the two views were overlapping (i.e. shift zero), the 3D stacks from the two views would be perfectly matching, i.e., the n-th image of the first stack 310a would be the same plane as the n-th image of the second stack 310b.

In embodiments of the invention, once the misalignment has been corrected, i.e. the shift 209 has been quantified and corrected for, the optimal 3D image of the sample may be created, e.g. by choosing the best of the two views or the best pixels from pixel-by-pixel analysis of the two views for each plane of the sample 103.

Specifically, reconstruction may be performed by the computed implemented method as described above. During reconstruction, an image 208a of the first stack 310a and an image 208b of the second stack 310b, which images correspond to the same plane of the sample, are combined. In particular the computer-implemented method, for generating a 3D image of the sample 103, comprises receiving image data comprising first and second stacks 310a, 310b of acquired images 208a, 208b, the stacks 310a, 310b characterized by a shift of planes of the sample 103 in a z-direction relative to each other, each stack 310a, 310b representing multiple planes of the sample in the z-direction, and each image 208a, 208b, representing a plane of the sample in the z-direction. Subsequently, the 3D image of the sample 103 is reconstructed based on the image data, wherein the shift 209 of the planes of the first and second stacks 310a, 310b relative to each other is at least partially corrected for.

As reflected exemplarily in Fig. 2, 3(a) and 3(b), at least steps (1) to (3) of the following steps are performed according to an embodiment of the invention, optionally further steps are performed:
(1) Adjusting, for different (multiple; optionally each) positions of the sample 103 in the z-direction, a light sheet 104 relative to the first imaging focal plane 107a of the first imaging objective 102a according to a first adjustment setting, and adjusting the light sheet 104 relative to the second imaging focal plane 107b of the second imaging objective 102b according to a second adjustment setting.
(2) Illuminating the sample 103 with at least one illumination beam 105a, 105b forming at least one light sheet 104 intersecting the sample 103; at multiple positions of the sample in a z-direction, detecting light emitted from the sample 103 along two different imaging/detection paths 106a, 106b (i.e. first and second detection paths) by means of the first and second imaging objectives 102a, 102b having respective first and second imaging focal planes 107a, 107b shifted relative to each other in the z-direction and intersecting the sample 103 (in order to image the sample from different perspectives/directions), wherein the sample is sequentially illuminated according to the first and second adjustment settings and the emitted light is detected via the first 102a and second 102b imaging objectives, respectively.
(3) Obtaining corresponding first and second stacks 310a, 310b of images, each stack representing multiple planes of the sample 103 in the z-direction, and each image 208a, 208b representing a plane of the sample 103 in the z-direction, wherein the first and second stacks 310a, 310b of images are characterized by a shift 209 of the planes in the z-direction relative to each other.
(4) Reconstructing the 3D image based on at least parts of the first and second stacks 310a, 310b of images, wherein the shift 209 of the planes of the first and second stacks relative to each other is at least partially corrected for and/or during reconstruction of the 3D image of the sample 103.

Embodiments of the disclosure may be regarded as characterized by specific alignment of the illumination for each view; sequential recording of views, each view recorded with its corresponding illumination alignment; computation of the misalignment between views based on similarity between the 3D stacks recorded from the two views.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope system 100 as described in connection with Fig. 1. A microscope may be part of the system 100. Fig. 1 shows a schematic illustration of a system 100 configured to perform a method described herein. The system 100 comprises a microscope and a computer system (not shown). The microscope is configured to take images and is connected to the computer system. The microscope system 100 may include a control unit configured to carry out the method of data acquisition as disclosed above. The computer system is configured to execute at least a part of a method described herein. The computer system may be configured to execute a machine learning algorithm. The computer system and microscope may be separate entities but can also be integrated together in one common housing. The computer system may be part of a central processing system of the microscope and/or the computer system may be part of a subcomponent of the microscope, such as a sensor, an actor, a camera or an illumination unit, etc. of the microscope.

The computer system may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system. Some or all of the method steps may be executed by (or using) a hardware apparatus, like for example, a processor, a microprocessor, a programmable computer or an electronic circuit.

In some embodiments, some one or more of the most important method steps may be executed by such an apparatus. Depending on certain implementation requirements, embodiments of the disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine readable carrier. Other embodiments comprise the computer program for performing one of the methods described herein, stored on a machine readable carrier. In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present disclosure is an apparatus as described herein comprising a processor and the storage medium.

A further embodiment of the disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer. program for performing one of the methods described herein.

A further embodiment according to the disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The detailed description is provided with respect to the embodiments depicted in the figures. Obvious variations and alternatives may occur to the skilled person, based on the remaining disclosure of the invention, in particular in the summary. These variations and alternatives are part of the invention in so far they are covered by the appended claims.

### LIST OF REFERENCE SIGNS

- 100: microscope system
- 101a, 101b: illumination objective
- 102a, 102b: imaging objective
- 103: sample
- 104: light sheet
- 105a, 105b: illumination path
- 106a, 106b: imaging path
- 107a, 107b: imaging focal plane
- 208a, 208b: 2D image
- 209: z-shift
- 310a, 310b: image stack
- na, nb: number of image in image stack
- x, y, z: spatial directions

## Claims

1. Method for acquiring 2D images (208a, 208b) of a sample (103), the method comprising the steps of
- illuminating the sample (103) with an illumination beam (105a, 105b) forming at least one light sheet (104) intersecting the sample,
- at multiple positions of the sample (103) in a z-direction (z), detecting light emitted from the sample (103) along two different imaging paths (106a, 106b) by means of first and second imaging objectives (102a, 102b), respectively, having respective first and second imaging focal planes (107a, 107b) shifted relative to each other in the z-direction (z) and intersecting the sample (103) and obtaining corresponding first and second stacks (310a, 310b) of images, each stack representing multiple planes of the sample (103) in the z-direction (z), and each image (208a, 208b) representing a plane of the sample (103) in the z-direction (z),
including a preceding adjustment step of
- for the multiple positions of the sample (103) in the z-direction, adjusting the light sheet (104) relative to the first imaging focal plane (107a) of the first imaging objective (102a) according to a first adjustment setting, and adjusting the light sheet relative to the second imaging focal plane (107b) of the second imaging objective (102a) according to a second adjustment setting, wherein
for image acquisition
- the sample (103) is sequentially illuminated according to the first and second adjustment settings and emitted light is detected via the first and second imaging objectives (102a, 102b), respectively, such that the first and second stacks (310a, 310b) of images are acquired, wherein the first and second stacks (310a, 310b) are **characterized by** a shift (209) of the planes in the z-direction relative to each other.

2. Method for obtaining a 3D image of a sample (103), comprising the method for acquiring images of the sample according to claim 1, wherein,
- the 3D image of the sample (103) is obtained based on at least parts of the first and second stacks (310a, 310b) of images, wherein the shift (209) of the planes of the first and second stacks (310a, 310b) relative to each other is at least partially corrected for reconstruction of the 3D image of the sample.

3. Method of any of the preceding claims, wherein the illumination beam (105a, 105b) is switched between the first and second adjustment settings during image acquisition.

4. Method of any of the preceding claims, wherein the sample (103) is sequentially illuminated according to the first and second adjustment settings at a same position of the sample in the z-direction.

5. Method of any of the preceding claims, wherein the sample (103) is illuminated at the multiple positions of the sample in the z-direction according to the respective first adjustment setting, and is subsequently illuminated at the multiple positions of the sample in the z-direction according to the respective second adjustment setting.

6. Method of any of the preceding claims, wherein the shift (209) between the first and second stacks (310a, 310b) is identified by means of image analysis.

7. Method of claim 6, wherein the image analysis includes at least one of
- cross-correlating the images (208a, 208b) of the stacks (310a, 310b) with each other, and
- a pixel-by-pixel correlation of at least a part of the images of each of the first and second stacks.

8. Method of any of the preceding claims, wherein an alignment procedure comprises: acquiring a plurality of images of the sample via the two different imaging paths (106a, 106b) while adjusting the light sheet (104) along the z-direction resulting in a first stack of alignment images and a second stack of alignment images, respectively, and determining in each of the acquired first stack of alignment images and second stack of alignment images an image having at least one of the highest image sharpness or the highest image contrast, in particular for identifying the shift (209) between the first and second stacks (310a, 310b) based on an alignment procedure.

9. Method of any of the preceding claims, if dependent on claim 2, wherein, during reconstruction, an image (208a) of the first stack and an image (208b) of the second stack, which images correspond to the same plane of the sample, are combined.

10. Method of any of the preceding claims, wherein the first and second imaging paths (106a, 106b) substantially run opposite to each other.

11. Method of any of the preceding claims, wherein the illumination beam selectively defines first and second illumination paths (105a, 105b) passing through first and second illumination objectives (101a, 101b), respectively, and forming a respective light sheet (104), wherein, for each illumination path (105a, 105b), corresponding first and second adjustment settings are provided, and the sample (103) is sequentially illuminated along the first illumination path (105a) according to the first and second adjustment settings for the first illumination path for detection via the first and second imaging objectives (102a, 102b), respectively, and along the second illumination path (105b) according to the first and second adjustment settings for the second illumination path for detection via the first and second imaging objectives (102a, 102b), respectively.

12. Method of claim 11, wherein an adjustment arrangement common to the first and second illumination paths (105a, 105b) provides the first and second arrangement settings.

13. Control unit configured to control a microscope system (100) to carry out the method of any of the preceding claims.

14. Microscope system (100) for imaging a sample (103), the microscope system comprising the control unit of claim 13.

15. Method, in particular a computer-implemented method, for generating a 3D image of a sample (103), comprising the steps of
- receiving image data comprising first and second stacks (310a, 310b) of acquired images (208a, 208b), the stacks (310a, 310b) **characterized by** a shift of planes of the sample (103) in a z-direction relative to each other, each stack (310a, 310b) representing multiple planes of the sample in the z-direction, and each image (208a, 208b) representing a plane of the sample in the z-direction,
- reconstructing the 3D image of the sample (103) based on the image data, wherein the shift of the planes of the first and second stacks (310a, 310b) relative to each other is at least partially corrected for reconstruction of the 3D image of the sample, wherein
- the first and second stacks (310a, 310b) of images represent images acquired by
∘ illuminating the sample (103) with an illumination beam (105a, 105b) forming at least one light sheet (104) intersecting the sample,
∘ at multiple positions of the sample in a z-direction, detecting light emitted from the sample (103) along two different imaging paths (106a, 106b) by means of first and second imaging objectives (102a, 102b), respectively, having respective first and second imaging focal planes (107a, 107b) shifted relative to each other in the z-direction and intersecting the sample (103), and obtaining corresponding first and second stacks (310a, 310b) of images, and
a preceding adjustment step of:
∘ for different positions of the sample (103) in the z-direction, adjusting the light sheet (104) relative to the first imaging focal plane (107a) of the first imaging objective (102a) according to a first adjustment setting, and adjusting the light sheet (104) relative to the second imaging focal plane (107b) of the second imaging objective (102b) according to a second adjustment setting, and
image acquisition further including
∘ sequential illumination of the sample (104) according to the first and second adjustment settings and detection of the emitted light via the first and second imaging objectives (102a, 102b), respectively, such that the first and second stacks (310a, 310b) of images are acquired.
